# EUROPEAN PATENT APPLICATION

(11) **EP 4 282 755 A1**
(43) Date of publication of application: **29.11.2023**
(21) Application number: 22175206.6
(22) Date of filing: 24.05.2022
(51) Int. Cl.: B64C 29/00, H01M 10/42, H01M 10/625, H01M 10/6556, H01M 50/204, H01M 50/249, H01M 50/258, H01M 50/264, H01M 50/284, H01M 50/583, H01M 50/503, H01M 50/509, H01M 50/342

(54) **BATTERY ASSEMBLY, IN PARTICULAR FOR USE IN AN ELECTRICAL PROPULSION VTOL AIRCRAFT, AND ELECTRICAL PROPULSION VTOL AIRCRAFT COMPRISING SUCH A BATTERY ASSEMBLY**

(71) Applicant: Lilium eAircraft GmbH, 82234 Wessling (DE)
(72) Inventor: PLAZA, Angel, 82234 Wessling (DE); RICCI MORETTI, Luigi Umberto, 82234 Wessling (DE); FRITSCH, Gerd, 82234 Wessling (DE); CARL, Julian, 82234 Wessling (DE); PITRE, Ryan, 82234 Wessling (DE); SOBCZAK, Pawel, 82234 Wessling (DE); EECKELEERS, Laurent, 82234 Wessling (DE)
(74) Representative: Weickmann & Weickmann PartmbB

(57) **Abstract**

The present invention relates to a battery assembly (10), comprising a battery box (100), comprising a housing (100a) including a base plate (102) and a cover (104); at least one battery cell stack mounted inside the housing (100a), wherein each of the battery cell stacks in turn comprises a plurality of battery cells stacked on top of the base plate (102) along a stacking direction and electrically connected in series or in parallel; electrical connectors (108) disposed on the outer side of the housing (100a); and an interface unit for coupling with an electronics unit (200); and an electronics unit (200), comprising electronic control components (204); and an interface unit for coupling with the battery box (100); wherein in use the battery box (100) and the electronics unit (200) are interfaced by their such respective interface units such that operation of the at least one battery cell stack is controlled by the electronic control components (204) of the electronics unit (200). Furthermore, the invention relates to an electrical propulsion VTOL aircraft comprising such a battery assembly.

## Description

The present invention relates to a battery assembly, in particular for use in an electrical propulsion VTOL aircraft, comprising a battery box and an electronics unit, as well as to an electrical propulsion VTOL aircraft comprising at least one such battery assembly.

Recently, more and more devices and vehicles from many different technical fields have been provided with batteries in order to supply electrical power for their operation, from hand-held electronic devices to vehicles such as electrically driven automobiles. This development has led to an increased interest in new and improved battery technologies, both concerning their reliability and performance.

Battery assemblies typically used in such devices and vehicles concerning their layout and form factors are closely related to the respective devices they are installed in in order to supply power. For example, in the automotive industry, battery assemblies are used in which individual battery cells are arranged in battery modules which in turn are oriented in such a manner that they are safe in worst load crashes, which typically are front crashes. Thus, the cells of such battery modules are usually stacked in a front-rear-direction of the respective vehicles, and typically there is a lack of segregation in between stacks in such applications. Furthermore, in electrically driven cars, batteries often become a structural component reinforcing the chassis in order to improve their integration into the vehicle frame and to provide further mechanical stiffness thereto.

While such types of battery modules and assemblies are widely used in electrically driven cars, they cannot simply be transferred to other applications, such as electrical propulsion aircraft, in which different load paths and safety regulations have to be observed. Also, the most efficient volume allocation in different applications of battery assemblies is also a design requirement, which has to be observed in any given use case and is highly dependent on the shape and size of the predetermined mounting positions of such battery assemblies in the respective devices.

In particular, in electrical propulsion aircraft, the highest possible protection from thermal runaway of individual cells has to be provided, since while an electrically driven car could in the exceedingly rare worst case of catastrophic battery malfunction be stopped on the side of the road and abandoned, such a possibility is not practical for aircraft which first would have to be safely landed in a designated area before passengers and crew can debark, such that there would not be enough time to deal with thermal runaway of battery cells if not contained at their earliest stages.

It is therefore an object of the present invention to provide a new and alternative battery assembly, which is particularly suitable for use in an electrical propulsion VTOL aircraft and offers optimum load distribution for such a use case as well as protection from thermal runaway and other catastrophic failures.

For this purpose, the battery assembly according to the present invention comprises a battery box, in turn comprising a housing including a base plate and a cover, at least one battery cell stack mounted inside the housing, wherein each of the battery cell stacks in turn comprises a plurality of battery cells stacked on top of the base plate along a stacking direction and electrically connected in series, electrical connectors disposed on the outer side of the housing, and an interface unit for coupling with an electronics unit, as well as an electronics unit, comprising electronic control components, and an interface unit for coupling with the battery box. According to the present invention, in use of the battery assembly, the battery box and the electronics unit are interfaced by their respective interface units such that operation of the at least one battery cell stack is controlled by the electronic control components of the electronics unit.

Thus, the battery assembly according to the present invention is divided into two main elements, the battery box, which houses the battery cells, and the electronics unit which comprises electronic control components. Both elements are designed in a way that they can be disconnected and replaced independently, which facilitates maintenance of the battery assembly and reduces overhead. Also, the physical segregation between the two elements prevents possible thermal runaway of battery cells from affecting the electronic control components comprised in the electronics unit. Hence, an additional safety layer is provided which contributes to containing possible failures of single battery cells and prevents damage to sensitive structures such as the electronic control components outside the battery box.

Furthermore, by stacking the battery cells on top of the base plate along their stacking direction, the battery assembly according to the present invention is particularly suitable for use cases, in which the worst load case is a load acting on the base plate from the side opposite to the battery cell stacks, such as would be the case during a hard landing of an aircraft provided with such a battery assembly in an upright configuration, in which the base plate is positioned on its bottom.

In order to provide cooling to the components housed in the battery box, said battery box may further comprise at least one inlet port, at least one outlet port and at least one cooling channel for circulating a cooling fluid therein. The cooling fluid may be provided by cooling pumps situated outside the battery assembly and any kind of known and suitable cooling fluid may be used. Alternatively or in addition, passive cooling means such as cooling fins or radiators may also be provided to the battery assembly according to the present invention in order to increase its cooling capabilities.

In order to provide a high level of separation between the individual battery cell stacks, which may be beneficial in case of thermal runaway of one of the battery cells comprised therein, one inlet port, one outlet port and one cooling circuit may be respectively provided for each of the battery cell stacks housed in the battery box. Additional measures for physically separating multiple battery cell stacks may also be provided, such as partition walls interposed between them.

In order to prevent thermal runaway gases, which may be produced in case of a failure of one of the battery cells housed in the battery box, from being ejected from the battery box in an uncontrolled manner, the cover of the battery box may be formed in a single piece and/or a sealing may be provided between the base plate and the cover. For example, the battery box may be formed of welded walls forming a hood, which can be placed over the at least one battery cell stack mounted on top of the base plate after its assembly and subsequently can be attached to the base plate with the sealing provided there between.

As a further measure, at least one burst disk may be provided between the inside and the outside of the housing of the battery box, in order to discharge possible thermal runaway gases from the battery box in a controlled manner, for example into dedicated exhaust piping from which it can be directed and passed to the outside of the device to which the battery assembly according to the invention is mounted. In particular, one or more such burst disks can be provided per battery cell stack as an additional means for isolating them from one another.

While it is possible to provide the electronics unit with its electronic control components at a distance from the battery box in any conceivable design and layout as long as an interfacing between the two components is feasible, the electronics unit may also comprise a housing, in which the electronic control components are mounted. In order to facilitate the coupling of the battery box and the electronics unit in such embodiments, the respective housings may be adapted for a positive mechanical fit for establishing a physical coupling between the battery box and the electronics unit. In such embodiments, the two components may simply be plugged together according to their positive mechanical fit, wherein during said plugging, the respective interface units for coupling the two components may become interfaced to one another thus establishing the connection required for the control of the operation of the at least one battery cell stack by the electronic control components housed in the electronics unit. The features for providing the positive mechanical fit between the two housings may be arranged such that the electronics unit may be connected to the base plate of the housing of the battery box from below or to the upper side of the cover of the battery box, such that the two components are aligned in the stacking direction of the battery cell stacks. Furthermore, the features of the respective housings allowing for the positive mechanical fit may at the same time be provided with suitable interface unit such that the mechanical connection of the battery box and the electronics unit automatically also establishes the interfacing of the two.

Since the most efficient types of battery cells available require a very balanced charging and discharging in order to be operated in their ideal working conditions and to be prevented from damages or premature aging, the electronic control components comprised in the electronics unit may form or comprise a power distribution unit, which is responsible for balancing the load between the individual battery cell stacks and/or battery cells during their charging and discharging in an optimal manner.

Additionally or alternatively, the electronics unit may comprise at least one fuse, in particular at least one pyrofuse, and/or a service disconnect mounted in its housing. Both fuses and service disconnects are additional safety features, which contribute to safe operation and facilitating maintenance of the battery assembly according to the present invention.

Neither the number of battery cells in the at least one battery cell stack nor the number of battery cell stacks in the battery box are restricted to a certain number or range. However, it may be beneficial if each of the battery cell stacks comprise between 20 and 100 battery cells, preferably between 40 and 80 battery cells, more preferably 54 battery cells, and/or between two and six, preferably four battery cell stacks are provided in the battery box. In particular, all battery cell stacks mounted in the battery box may be formed from an identical number of battery cells which may also be arranged in a similar or identical manner within the battery cell stack. Depending on both the number of battery cells in the individual battery cell stacks and the number of battery cell stacks provided in the battery box, the output voltage and overall capacity of the battery assembly will be determined.

In particular, the plurality of battery cell stacks may be interconnected in series or parallel by means of jumper bus bars, such that their individual voltages correspondingly add up to an overall voltage provided by the battery assembly. In such embodiments, a single pair of electrical connectors may be provided at the battery box to be connected with external electrical loads to be supplied with power. Alternatively, each of the battery cell stacks or groups thereof may respectively be provided with pairs of electrical connectors, such that they can individually be connected to outside loads.

For forming the at least one battery cell stack, it can at both ends in the stacking direction comprise a respective compression plate, wherein a tension member is provided for compressing the battery cell stack along the stacking direction between the pair of compression plates.

In order to monitor the individual battery cells during operation of the battery assembly, each of the battery cell stacks may be provided with a cell supervision circuit adapted for this task, which may detect problems or undesired operating conditions.

While the integration of the battery assembly according to the present invention into a device to be powered by it may be provided in any conceivable way, it may also be beneficial to provide a plurality of attachment units to the battery box for attaching the battery to a superordinate structure. In particular, said attachment units may be provided at the base plate and/or the top side of the cover of the housing.

According to a second aspect, the present invention relates to an electrical propulsion VTOL aircraft, comprising at least one pair of wings, a fuselage defining a vertical direction, a plurality of electrically driven propulsion motors, and at least one battery assembly according to the present invention adapted to provide electrical power for driving the propulsion motors, wherein the at least one battery assembly is mounted in the fuselage in such a manner that the stacking direction of the at least one battery cell stack substantially coincides with the vertical direction of the aircraft. Herein, the vertical direction of the aircraft corresponds to the vertical takeoff direction thereof which is perpendicular to a forward cruise direction, and the worst load case corresponds to a substantially vertical crash or hard landing of the aircraft in the downward vertical direction.

In particular, the battery box and the electronics unit of the at least one battery assembly may be aligned along the vertical direction of the aircraft, wherein preferably the electronics unit is mounted below the battery box and/or the respective housings of the battery box and the electronics unit are physically coupled to one another. Thus, by arranging the electronics unit below the battery box, in case of a vertical crash or hard landing, the battery box is provided with another layer of protection.

Alternatively or additionally, at least one crash absorption structure may be provided below the at least one battery assembly along the vertical direction of the aircraft, wherein preferably the at least one crash absorption structure is vertically aligned with a corresponding reinforcement member at least partially surrounding the housing of the electronics unit. For this purpose, the crash absorption structures may be formed as cushioning elements or corrugated sheet elements which may deform in order to absorb energy in hard landings or vertical crashes. Hence, an additional protection mechanism for the most fragile elements of the battery assemblies is introduced and by means of the reinforcement members surround the electronics unit, a load path is provided for any shocks acting on the assembly in a vertical direction.

In one particular embodiment of the aircraft according to the invention, the propulsion motors may be integrated with flap elements pivotably mounted to the wings, which depending on their pivot position may provide for vertical thrust in order to vertically take off, land or hover or substantially horizontal thrust to propel the aircraft in a horizontal direction in a cruise flight configuration.

Further features and advantages of the present invention will become even clearer from the following description of an embodiment thereof, when regarded together with the accompanying drawings. These drawings show in particular:
- Fig. 1: an external side view of an embodiment of a battery assembly according to the present invention;
- Fig. 2: the battery box of the battery assembly of Fig. 1 in an external view with the electronics unit removed;
- Fig. 3: the battery box of Fig. 2 with its cover removed;
- Fig. 4: a schematic side view of an aircraft provided with a plurality of battery assemblies according to the present invention; and
- Fig. 5: a second embodiment of a battery assembly according to the invention, mounted in the aircraft of Fig. 4.

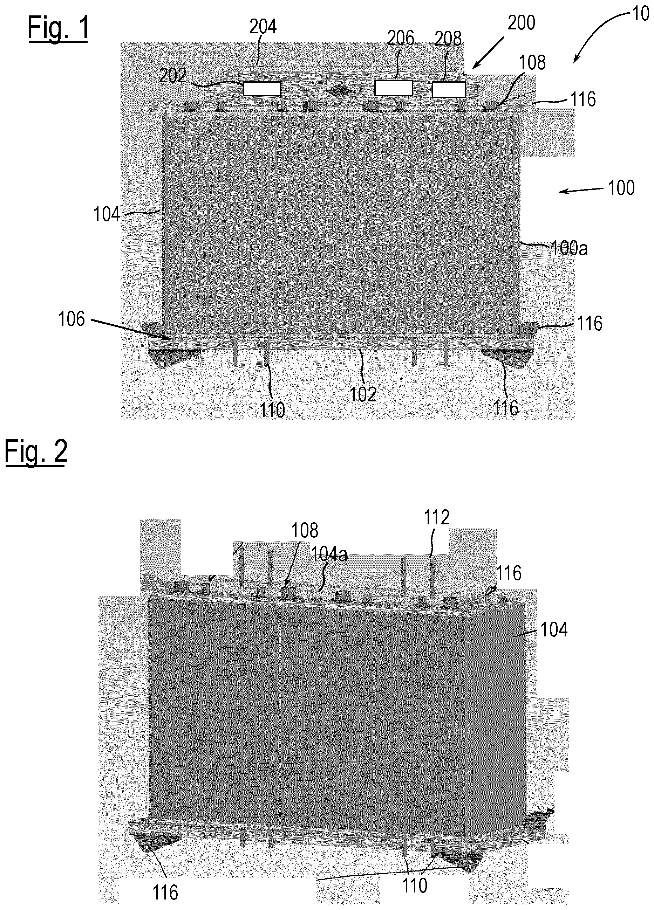

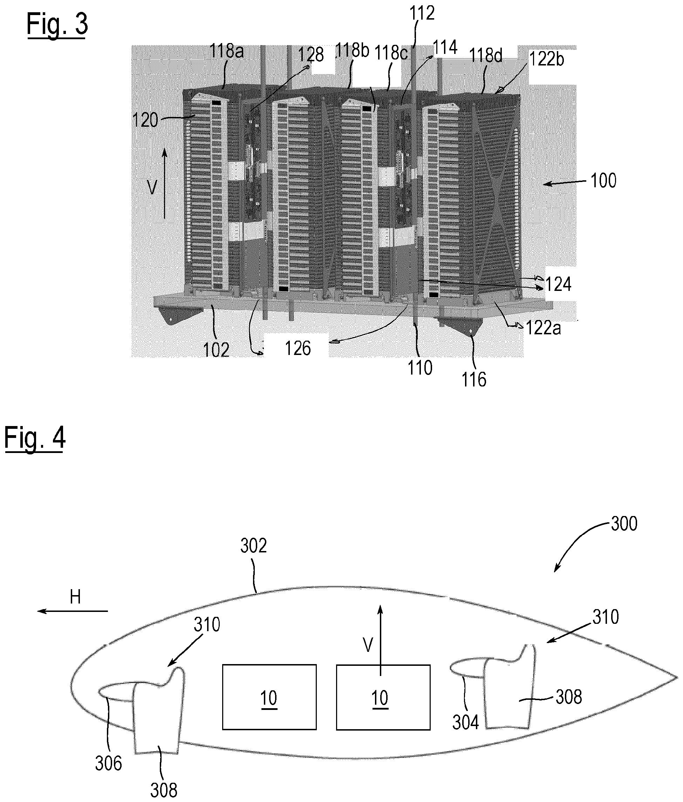

In Fig. 1, a first embodiment of a battery assembly according to the present invention is shown in an external view and generally denoted with reference numeral 10. Said battery assembly comprises a battery box 100 and an electronics unit 200, which are physically coupled and interfaced by a positive mechanical fit explained below and respective interface units, which are not shown in Fig. 1. Furthermore, in Fig. 2 the battery box 100 of the battery assembly of Fig. 1 is shown in an external view with the electronics unit 200 removed, and Fig. 3 shows the battery box 100 of Fig. 2 with its cover 104 (see below) removed.

It can be seen that the outside of the battery box 100 is formed by a base plate 102 and a cover 104, which together form a housing 100a of the battery box 100 and between which a sealing 106 is provided in order to seal the inside of the housing 100a from its outside. Therein, the cover 104 can be mounted on top of the base plate 102 and covers all components housed in the housing 100a from above and all four sides.

It can further be seen that on the upper side of the cover 104, four pairs of connectors 108 are provided, corresponding to the individual battery cell stacks 118a to 118d housed inside the battery box 100 and shown in Fig. 3. Also, as can in particular be seen in Fig. 2, the battery box 100 is also provided with a respective number of inlet ports 110, outlet ports 112 and cooling channels 114 for circulating a cooling fluid therein which is interfaced with an outside cooling circuit.

In order to facilitate a mounting of the battery assembly 10 to a superordinate structure such as the fuselage of the electrical propulsion VTOL aircraft shown in Fig. 4, a plurality of attachment units 116 are provided to the battery box 100, in the given example six such attachment units 116, four of them provided at the base plate 102 and two of them provided at the upper side of the cover 104.

On the other hand, the electronics unit 200 comprises a housing 202, which houses electronic control components only shown schematically in Fig. 2, such as a power distribution unit 202, at least one pyrofuse 206 and a service disconnect 208. By attaching and interfacing the electronics unit 200 to the battery box 100, the operation of the battery cell stacks 118a to 118d housed in the battery box 100 and described below can be controlled during its operation.

On the upper face of the cover 104 of the battery box 100, a ridge 104a is formed in order to allow for physical coupling with the electronics unit 200, which on its lower face has a corresponding notch, such that the battery box 100 and the electronics unit 200 can be connected by means of a positive mechanical fit between the ridge 104a and the notch in a single relative vertical movement of the two components.

As mentioned above, Fig. 3 shows the battery box 100 with its cover 104 removed, such that the battery cell stacks 118a to 118d are visible. Each of the battery cell stacks 118a to 118d is formed in a similar manner and comprises 54 individual battery cells 120, which are compressed between respective compression plates 122a and 122b by means of a tension member 124. The individual battery cell stacks 118a to 118d are interconnected by means of jumper bus bars 126 and individually cooled by means of the cooling channels 114 already mentioned above.

By thus stacking the individual battery cells 120 according to a stacking direction V on top of the base plate 102, large loads can be absorbed by this structure in the direction of said stacking direction V due to favorable force distribution within the battery cell stacks 118a to 118d and due to the reinforced base plate 102.

Also, each of the battery cell stacks 118a - 118d is provided with a cell supervision circuit 128 for supervising the battery cells 120 during operation of the battery assembly 10.

Furthermore, reference shall be made to Fig. 4, in which an electrical propulsion VTOL aircraft is shown in a schematic side view and referred to by reference numeral 300. Said aircraft 300 comprises a fuselage 302, a pair of wings 304 and a pair of canard wings 306 positioned in front of the wings 304 with respect to the main horizontal flying direction H of the aircraft 300. To each of the wings 304 and canard wings 306, a plurality of electrical engines or propulsion motors 308 are mounted in a tiltable manner by means of flap elements 310 pivotably mounted to the wings 304 and canards 306.

As also can be seen in Fig. 4, a plurality of battery assemblies 10 according to the present invention are mounted in the fuselage 302 in such a manner that the stacking direction V of the battery cell stacks housed therein substantially coincides with the vertical direction of the aircraft 300. Said battery assemblies 10 in operation of the aircraft 300 supply electrical power to the electrical systems of the aircraft 300, including the electrical propulsion motors 308.

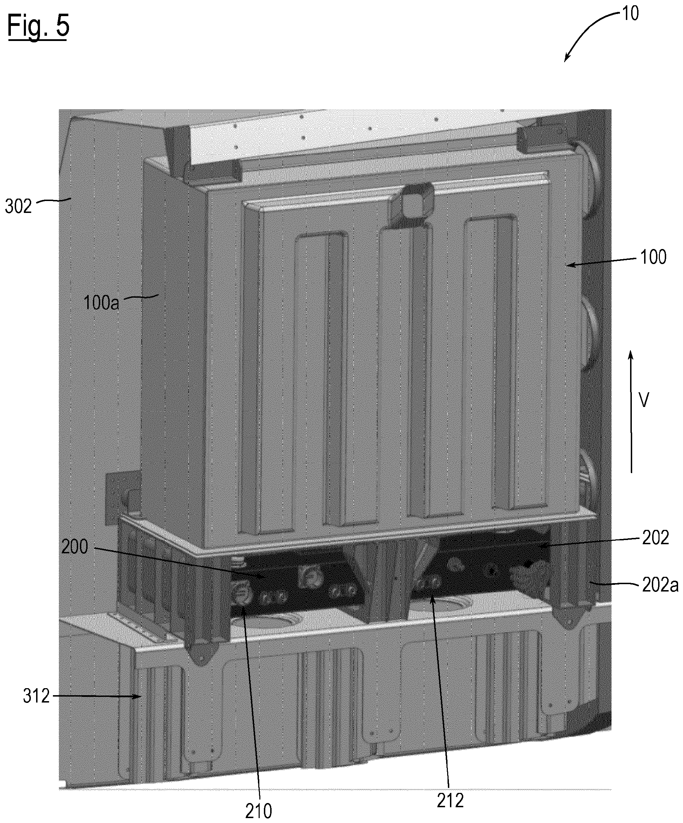

Lastly, in Fig. 5 a second embodiment of a battery assembly according to the invention is shown, which may also be mounted in aircraft 300 as shown in Fig. 4. Said further embodiment in a similar manner as the battery assembly 10 shown in Fig.1 comprises a battery box 100 and an electronics unit, which are provided with respective housings 100a, 202 and can be connected and interfaced via a positive mechanical fit.

It can further be seen in Fig. 5 that in contrast to the embodiment shown in Fig. 1, the electronics unit 200 is mounted below the housing 100 with respect to the vertical direction V of the aircraft 300, while additionally crash absorption structures 312 in the form of corrugated sheet material, preferably made from metal, are provided in the fuselage 302 of aircraft 300 below the battery assembly 10 along the vertical direction V of the aircraft 300. In particular, the crash absorption structures are vertically aligned with corresponding reinforcement members 202a partially surrounding the housing 202 of the electronics unit 200.

The arrangement of the electronics unit 200 below the battery box 100 in certain embodiments of the aircraft 300 allows for an improved routing of cables for delivering power from the battery assembly 10 to components of the aircraft, such as the above-mentioned propulsion motors 308, in order to reduce overall cable length. In this context, it shall be noted that in the embodiment shown in Fig. 5, the electrical connections to said external loads such as engines are provided through the electronics unit and corresponding high-voltage connectors 210 are arranged on the housing 202 thereof. Thus, a corresponding high-voltage connection is provided between the battery box 100 and the electronics unit 200 such that the voltage provided by the battery cell stacks 118a - 118d is looped through the electronics unit 200 before it can be tapped at the connectors 210.

Several additional interfaces 212 are also provided on the housing 202 of the electronics unit, such as data connectors for communication with a central control unit of the aircraft 300, load sharing pins and an emergency shutdown switch.

## Claims

1. Battery assembly (10), in particular for use in an electrical propulsion VTOL aircraft (300), comprising:
- a battery box (100), comprising:
∘ a housing (100a) including a base plate (102) and a cover (104);
∘ at least one battery cell stack (118a - 118d) mounted inside the housing (100a),
wherein each of the battery cell stacks (118a - 118d) in turn comprises a plurality of battery cells (120) stacked on top of the base plate (102) along a stacking direction (V) and electrically connected in series or in parallel;
∘ electrical connectors (108) disposed on the outer side of the housing (100a); and
∘ an interface unit for coupling with an electronics unit (200);
- an electronics unit (200), comprising:
∘ electronic control components (204); and
∘ an interface unit for coupling with the battery box (100);
wherein in use the battery box (100) and the electronics unit (200) are interfaced by their respective interface units such that operation of the at least one battery cell stack (118a - 118d) is controlled by the electronic control components (204) of the electronics unit (200).

2. Battery assembly (10) according to claim 1,
wherein the battery box (100) further comprises at least one inlet port (110), at least one outlet port (112) and at least one cooling channel (114) for circulating a cooling fluid therein,,
wherein preferably one inlet port (110), one outlet port (112) and one cooling circuit (114) are respectively provided for each of the battery cell stacks (118a - 118d).

3. Battery assembly (10) according to any of the preceding claims,
wherein the cover (104) of the battery box (100) is formed in a single piece and/or wherein a sealing (106) is provided between the base plate (102) and the cover (104).

4. Battery assembly (10) according to any of the preceding claims,
wherein at least one burst disk is provided between the inside and the outside of the housing (100a) of the battery box (100).

5. Battery assembly (10) according to any of the preceding claims,
wherein the electronics unit (200) comprises a housing (202), in which the electronic control components (204) are mounted; and
wherein the respective housings (100a) of the battery box and the electronics unit (202) are adapted for a positive mechanical fit for establishing a physical coupling between the battery box (100) and the electronics unit (200).

6. Battery assembly (10) according to any of the preceding claims,
wherein the electronic control components (204) form or comprise a power distribution unit, and/or.
wherein the electronics unit (200) further comprises at least one fuse (206), in particular at least one pyrofuse, and/or a service disconnect (208) mounted in its housing (202).

7. Battery assembly (10) according to any of the preceding claims,
wherein each of the battery cell stacks (118a - 118d) comprises between 20 and 100 battery cells (120), preferably between 40 and 80 battery cells (120), more preferably 54 battery cells (120) and/or between two and six, preferably four battery cell stacks (118a - 118d) are provided in the battery box (120).

8. Battery assembly (10) according to any of the preceding claims,
wherein a plurality of battery cell stacks (118a - 118d) are provided, which are interconnected in series or in parallel by means of jumper bus bars (126).

9. Battery assembly (10) according to any of the preceding claims,
wherein the at least one battery cell stack (118a - 118d) on both ends in the stacking direction comprises a respective compression plate (122a, 122b), wherein a tension member (124) is provided for compressing the battery cell stack (118a - 118d) along the stacking direction (V).

10. Battery assembly (10) according to any of the preceding claims,
wherein each of the battery cell stacks (118a - 118d) is provided with a cell supervision circuit (128) for supervising the battery cells (120) during operation.

11. Battery assembly (10) according to any of the preceding claims,
wherein a plurality of attachment units (116) are provided to the battery box (100) for attaching the battery assembly (10) to a superordinate structure.

12. Electrical propulsion VTOL aircraft (300), comprising:
- at least one pair of wings (304);
- a fuselage (302) defining a vertical direction;
- a plurality of electrically driven propulsion motors (308); and
- at least one battery assembly (10) according to any of the preceding claims adapted to provide electrical power for driving the propulsion motors (308),
wherein the at least one battery assembly (10) is mounted in the fuselage (302) in such a manner that the stacking direction (V) of the at least one battery cell stack (10) substantially coincides with the vertical direction of the aircraft (300).

13. Aircraft (300) according to claim 12,
wherein the battery box (100) and the electronics unit (200) of the at least one battery assembly (10) are aligned along the vertical direction of the aircraft, wherein preferably the electronics unit (200) is mounted below the battery box (100) and/or the respective housings (100a) of the battery box and the electronics unit (202) are physically coupled to one another.

14. Aircraft according to claim 12 or claim 13, wherein at least one crash absorption structure (312) is provided below the at least one battery assembly (10) along the vertical direction of the aircraft, wherein preferably the at least one crash absorption structure is vertically aligned with a corresponding reinforcement member (202a) at least partially surrounding the housing (202) of the electronics unit (200).

15. Aircraft (300) according to any of claims 12 to 14,
wherein the propulsion motors (308) are integrated with flap elements pivotably mounted to the wings (304).
